# EUROPÄISCHE PATENTANMELDUNG

(11) **EP 3 290 245 A1**
(43) Veröffentlichungstag der Anmeldung: **07.03.2018**
(21) Anmeldenummer: 17188223.6
(22) Anmeldetag: 29.08.2017
(51) Int. Cl.: B60H 1/34

(54) **LUFTAUSSTRÖMER**

(30) Priorität: 01.09.2016 DE 102016116358
(71) Anmelder: Fischer Automotive Systems GmbH & Co. KG, 72160 Horb a.N. (DE)
(72) Erfinder: Schaal, Falk, 72250 Freudenstadt (DE)
(74) Vertreter: Suchy, Ulrich Johannes

(57) **Zusammenfassung**

Die Erfindung betrifft einen Luftausströmer (1) zur Belüftung eines Fahrgastraums eines Kraftwagens und schlägt vor, ein Luftmengensteuerelement (8) in einem Luftteiler (5) vorzusehen, das wahlweise in einen von zwei Luftkanälen (6) bewegbar ist, in die der Luftteiler (5) den Luftausströmer (1) teilt. Ein Verhältnis von Luftmengen, die durch die beiden Luftkanäle (6) strömen, bestimmt eine Ausströmungsrichtung aus dem Luftausströmer (1).

## Beschreibung

Die Erfindung betrifft einen Luftausströmer mit den Merkmalen des Oberbegriffs des Anspruchs 1. Luftausströmer dienen einer Belüftung, Beheizung und ggf. Kühlung eines Fahrgastraums eines Kraftwagens und sind dort beispielsweise in einem Armaturenbrett angeordnet.

Das Patent DE 10 2013 210 055 B3 offenbart einen Luftausströmer mit einem im Querschnitt rechteckigen Gehäuse, das eine rechteckige Lufteintrittsöffnung und eine ebenfalls rechteckige Luftaustrittsöffnung aufweist. Das Gehäuse des bekannten Luftausströmers erweitert sich in einer Durchströmungsrichtung hinter der Lufteintrittsöffnung und verjüngt sich anschließend wieder in Richtung zur Luftaustrittsöffnung. "Durchströmungsrichtung" meint von der Lufteintrittsöffnung zur Luftaustrittsöffnung. In einem erweiterten Bereich, der den sich erweiternden und den sich verjüngenden Bereich des Gehäuses umfasst, weist der Luftausströmer einen Luftteiler auf, der sich mit einem Stromlinienprofil in dem sich erweiternden Bereich des Gehäuses erweitert und in dem sich verjüngenden Bereich des Gehäuses wieder verjüngt. Der Luftteiler teilt das Gehäuse des Luftausströmers in zwei Luftkanäle mit jeweils gleichen, flachen und in einer Strömungsrichtung gleichbleibenden Querschnitten, die hinter der Lufteintrittsöffnung in dem sich erweiternden Bereich zunächst auseinander und anschließend in dem sich verjüngenden Bereich zur Luftaustrittsöffnung schräg aufeinander zu laufen. Ein durch die Lufteintrittsöffnung in das Gehäuse des Luftausströmers strömender Luftstrom wird vom Luftteiler in zwei Luftströme durch die beiden Luftkanäle geteilt, die zunächst auseinander und anschließend wieder schräg aufeinander zu strömen, so dass sie an oder nach der Luftaustrittsöffnung schräg zusammen strömen und sich zu einem gemeinsamen Luftstrom vereinigen.

An einem der Lufteintrittsöffnung zugewandten Ende des Luftteilers weist der bekannte Luftausströmer einen Leitflügel auf, der sich über eine Breite des Gehäuses und des Luftteilers erstreckt und der nach oben und unten schwenkbar ist, so dass er wahlweise einen der beiden Luftkanäle mehr oder weniger stark versperrt. In seinen Endstellungen sperrt der Leitflügel jeweils einen der beiden Luftkanäle ganz. Durch Schwenken des Leitflügels lässt sich ein durch die Lufteintrittsöffnung in das Gehäuse des Luftausströmers strömender Luftstrom in die beiden Luftkanäle aufteilen, d. h. ein Verhältnis der durch die beiden Luftkanäle strömenden Luftmengen einstellen. Das Verhältnis der Luftströme durch die beiden Luftkanäle bestimmt wegen der zur Luftaustrittsöffnung schräg aufeinander zu laufenden Luftkanäle eine Richtung des vereinigten Luftstroms nach Austritt aus der Luftaustrittsöffnung des Luftausströmers: Eine größere Luftmenge aus einem der beiden Luftkanäle lenkt den gemeinsamen Luftstrom nach der Luftaustrittsöffnung schräg in die entsprechende Richtung.

Um den Luftstrom zur Seite zu lenken, weist der bekannte Luftausströmer gemeinsam schwenkbare, zueinander parallele und senkrecht zum Luftteiler angeordnete Lamellen in der Durchströmungsrichtung vor dem Leitflügel auf.

Aufgabe der Erfindung ist, eine Alternative zur Luftlenkung quer zum Luftteiler eines Luftausströmers der vorstehend erläuterten Art vorzuschlagen, die insbesondere einen kompakteren Aufbau erlaubt.

Diese Aufgabe wird erfindungsgemäß durch die Merkmale des Anspruchs 1 gelöst. Der erfindungsgemäße Luftausströmer weist ein Gehäuse mit einer Lufteintrittsöffnung und einer Luftaustrittsöffnung auf. In dem Gehäuse ist ein Luftteiler angeordnet, der das Gehäuse in zwei Luftkanäle teilt, die in Richtung der Luftaustrittsöffnung schräg aufeinander zu verlaufen und dadurch eine Richtung eines gemeinsamen Luftstroms aus der Luftaustrittsöffnung senkrecht zum Luftteiler bzw. in der Richtung, in der die beiden Luftkanäle schräg aufeinander zu verlaufen, bestimmen.

Um die Richtung des gemeinsamen Luftstroms aus der Luftaustrittsöffnung beeinflussen zu können, weist der erfindungsgemäße Luftausströmer eine verstellbare Luftmengensteuerung in mindestens einem und vorzugsweise in beiden Luftkanälen auf. Die Luftmengensteuerung ist in der Durchströmungsrichtung nicht vor dem Luftteiler, sondern in den beiden Luftkanälen, in die der Luftteiler das Gehäuse des Luftausströmers teilt, angeordnet. Die Luftmengensteuerung kann beispielsweise in dem Luftteiler untergebracht sein und ein oder mehrere Elemente aufweisen, die mehr oder weniger weit in einen oder in beide Luftkanäle bewegt werden können. Die Luftmengensteuerung steuert, beispielsweise drosselt einen Luftstrom durch einen der beiden Luftkanäle oder die Luftströme durch beide Luftkanäle, sie kann einen oder beide Luftkanäle auch ganz sperren. Weil die beiden Luftkanäle zur Luftaustrittsöffnung schräg aufeinander zu verlaufen, beeinflusst das Verhältnis der Luftmengen, die die beiden Luftkanäle durchströmen, die Austrittsrichtung des gemeinsamen Luftstroms aus dem Luftausströmer, zu dem sich die Luftströme durch die beiden Luftkanäle vereinigen: Eine größere Luftmenge durch einen der beiden Luftkanäle lenkt den gemeinsamen Luftstrom schräg in die entsprechende Richtung.

Die beiden Luftkanäle, in die der Luftteiler das Gehäuse teilt, können bis zur Luftaustrittsöffnung reichen oder vorher enden. Vorzugsweise weisen das Gehäuse und/oder die Luftkanäle Innenquerschnitte auf, die quer zur Durchströmungsrichtung und parallel zum Luftteiler breiter als senkrecht zum Luftteiler hoch sind. Insbesondere weisen das Gehäuse und/oder die Luftkanäle rechteckige Innenquerschnitte auf.

Ausgestaltungen der Erfindung sehen ein bewegliches, beispielsweise schwenkbares und/oder verschiebbares Luftmengensteuerelement als Luftmengensteuerung oder als Teil der Luftmengensteuerung vor. Es können auch mehrere bewegliche Luftmengensteuerelemente vorhanden sein. Das oder die Luftmengensteuerelemente sind bei Ausgestaltungen der Erfindung in dem Luftteiler angeordnet. Das oder die Luftmengensteuerelemente können beispielsweise aus dem Luftteiler heraus in einen oder in beide Luftkanäle bewegliche Schieber, Klappen oder Ruder nach Art der Ruder eines Höhen- oder Seitenleitwerks oder eines Querruders eines Flugzeugs sein. Die Aufzählung ist beispielhaft und nicht abschließend. Eine Ausgestaltung der Erfindung sieht einen oder mehrere Drehschieber als Luftmengensteuerelemente vor. Ein Drehschieber ist in der Durchströmungsrichtung durch den Luftausströmer auch vor dem Luftteiler oder an einem der Lufteintrittsöffnung oder einem der Luftaustrittsöffnung zugewandten Ende des Luftteilers denkbar.

Die vorstehend erläuterte Luftmengensteuerung dient der Steuerung des gemeinsamen Luftstroms aus der Luftaustrittsöffnung des Luftausströmers quer zum Luftteiler, wobei die Luft nicht quer sondern schräg mit einer Komponente in der Durchströmungsrichtung und einer Komponente quer zur Durchströmungsrichtung und quer zum Luftteiler ausströmt. Mit der Luftmengensteuerung wird die Komponente quer zum Luftteiler beeinflusst.

Um die Ausströmungsrichtung auch parallel zum Luftteiler beeinflussen zu können, sieht eine Ausgestaltung der Erfindung eine verstellbare Luftleiteinrichtung in einem oder beiden Luftkanälen vor. Die Luftleiteinrichtung, die beispielsweise eine oder mehrere Klappen oder - vorzugsweise gemeinsam - schwenkbare Lamellen aufweisen kann, kann in der Durchströmungsrichtung auch vor oder hinter dem Luftteiler angeordnet sein.

Die Erfindung wird nachfolgend anhand in der Zeichnung dargestellter Ausführungsbeispiele näher erläutert. Die Figuren zeigen Schnitte von vier Ausführungsbeispielen erfindungsgemäßer Luftausströmer. Die Zeichnungen sind vereinfachte Darstellungen zum Verständnis und zur Erläuterung der Erfindung.

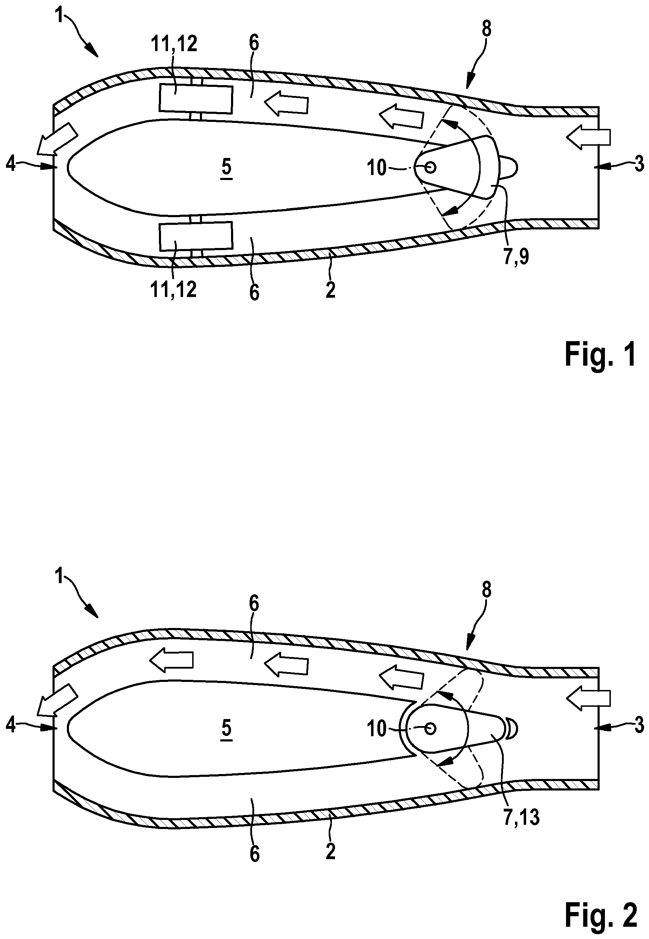

Der in Figur 1 dargestellte, erfindungsgemäße Luftausströmer 1 ist zur Belüftung, Heizung und gegebenenfalls Kühlung eines Fahrgastraums eines nicht dargestellten Kraftwagens und dort zum Einbau in ein Armaturenbrett vorgesehen. Der Luftausströmer 1 weist ein Gehäuse 2 mit einer Lufteintrittsöffnung 3 und einer Luftaustrittsöffnung 4 auf. Die Zeichnung zeigt einen Längsschnitt des Luftausströmers 1, wobei "Längsschnitt" in Richtung einer Durchströmungsrichtung von der Lufteintrittsöffnung 3 zu der Luftaustrittsöffnung 4 meint. Das Gehäuse 2 weist ebenso wie die Lufteintrittsöffnung 3 und die Luftaustrittsöffnung 4 einen rechteckigen Innenquerschnitt quer zu der Durchströmungsrichtung auf. Ausgehend von der Lufteintrittsöffnung 3 weist das Gehäuse 2 zunächst auf einem ersten Längsabschnitt einen gleichbleibenden Rechteckquerschnitt auf, erweitert sich auf einem anschließenden zweiten Längsabschnitt bogenförmig senkrecht zur Durchströmungsrichtung und verjüngt sich auf einem anschließenden dritten Längsabschnitt wieder zur Luftaustrittsöffnung 4, deren Querschnitt gleich oder ungefähr gleich wie ein Querschnitt der Lufteintrittsöffnung 3 ist. Der Querschnitt des Gehäuses 2 ändert sich nur in einer Höhe, eine Breite des Gehäuses 2 ist konstant.

In einem erweiterten Bereich des Gehäuses 2, also im zweiten und dritten Längsabschnitt, weist das Gehäuse 2 einen feststehend in ihm angeordneten Luftteiler 5 auf, der sich über die gesamte Breite des Gehäuses 2 erstreckt. Im Ausführungsbeispiel weist der Luftteiler 5 ein über die gesamte Breite des Gehäuses 2 gleichbleibendes, symmetrisches Tragflächenprofil auf, dessen spitzes Ende der Lufteintrittsöffnung 3 und dessen rundes Ende der Luftaustrittsöffnung 4 zugewandt ist. Ein Tragflächenprofil des Luftteilers 5 ist allerdings nicht zwingend für die Erfindung. Der erweiterte Bereich des Gehäuses 2 ist eine nicht maßstäblich Vergrößerung des Tragflächenprofils des Luftteilers 5. Der Luftteiler 5 teilt das Gehäuse 2 in zwei Luftkanäle 6 mit in der Durchströmungsrichtung durch den Luftausströmer 1 gleichbleibenden rechteckigen Querschnitten. Die beschriebene Form ist nicht zwingend für den erfindungsgemäßen Luftausströmer 1

Entsprechend der sich in der Durchströmungsrichtung zunächst aufweitenden und anschließend wieder verjüngenden Form des Gehäuses 2 und des Luftteilers 5 verlaufen die beiden Luftkanäle 6 zunächst auseinander und anschließend zur Luftaustrittsöffnung 4 wieder schräg aufeinander zu. Nahe dem der Lufteintrittsöffnung 3 zugewandten Ende ist ein bewegliches Luftmengensteuerelement 7 in einer Aussparung des Luftteilers 5 angeordnet. Das Luftmengensteuerelement 7 befindet sich in der Durchströmungsrichtung durch den Luftausströmer 1 gesehen vollständig innerhalb des Luftteilers 5, es weist einen kleinen Abstand von dem der Lufteintrittsöffnung 3 zugewandten Ende des Luftteilers 5 auf. Mit "nahe" ist gemeint, dass sich das Luftmengensteuerelement 7 in der Durchströmungsrichtung durch den Luftausströmer 1 gesehen in einem Bereich des Luftteilers 5 befindet, der sich von dem der Lufteintrittsöffnung 3 zugewandten Ende des Luftteilers 5 über etwa ¼ bis ⅓ einer Länge des Luftteilers 5 in der Durchströmungsrichtung erstreckt.

Das Luftmengensteuerelement 7 ist aus dem Luftteiler 5 heraus wahlweise in einen der beiden Luftkanäle 6 bewegbar, so dass es einen Luftstrom durch einen der beiden Luftkanäle 6 drosselt und in seinen Endstellungen jeweils einen der beiden Luftkanäle 6 versperrt. Möglich sind auch Ausführungen mit Luftmengensteuerelementen 7 für jeden der beiden Luftkanäle 6 (nicht dargestellt). Das Luftmengensteuerelement 7 bildet eine verstellbare Luftmengensteuerung 8 des Luftausströmers 1 oder Teil einer solchen Luftmengensteuerung 8. Mit der Luftmengensteuerung 8 lässt sich ein Verhältnis von Luftmengen, die durch die beiden Luftkanäle 6 strömen, steuern. Wegen der zur Luftaustrittsöffnung 4 hin schräg aufeinander zu verlaufenden Luftkanäle 6 bestimmt das Verhältnis der durch die beiden Luftkanäle 6 strömenden Luftmengen eine Richtung einer Ausströmung von Luft aus der Luftaustrittsöffnung 4 des Luftausströmers 1: Eine größere Luftmenge durch einen der beiden Luftkanäle 6 lenkt einen gemeinsamen Luftstrom aus der Luftaustrittsöffnung 4 des Luftausströmers 1, zu dem sich die Luftströme durch die beiden Luftkanäle 6 vereinigen, schräg in die entsprechende Richtung. Je größer ein Unterschied zwischen den durch die beiden Luftkanäle 6 strömenden Luftmengen ist, desto stärker wird der gemeinsame Luftstrom aus der Luftaustrittsöffnung 4 zur entsprechenden Seite gelenkt. Die Luftmengensteuerung 8 befindet sich innerhalb der beiden Luftkanäle 6, also innerhalb des zweiten und des dritten Längsabschnitts des Gehäuses 2, in dem der Luftteiler 5 das Gehäuse 2 in die beiden Luftkanäle 6 teilt. In den Ausführungsbeispielen befindet sich die Luftmengensteuerung 8 im zweiten Längsabschnitt, in dem sich das Gehäuse 2 in der Durchströmungsrichtung erweitert. Die Luftmengensteuerung 8 befindet sich in der Durchströmungsrichtung weder vor noch hinter dem Luftteiler 5.

In Figur 1 ist das Luftmengensteuerelement 7 ein Profilkörper 9 mit einem über die Breite des Luftausströmers 1 gleichbleibenden Dreiecksprofil mit Rundungen anstelle von Kanten. Eine Grundseite des Dreiecksprofils ist der Lufteintrittsöffnung 3 zugewandt. Das Luftmengensteuerelement 7 ist um eine Schwenkachse 10 an seinem der Luftaustrittsöffnung 4 zugewandten Ende, die in Richtung der Breite des Luftausströmers 1 verläuft, schwenkbar. Das Luftmengensteuerelement 7 ist in einer neutralen Mittelstellung gezeichnet, in der es beide Luftkanäle 6 teilweise und jeweils gleich stark sperrt. Es lässt sich bis in mit Strichlinien gezeichneten Endstellungen schwenken, in denen es jeweils einen der beiden Luftkanäle 6 vollständig sperrt. Das Luftmengensteuerelement 7 ist stufenlos in jede Zwischenstellung zwischen den beiden Endstellungen schwenkbar.

Um den gemeinsamen Luftstrom aus der Luftaustrittsöffnung 3 des Luftausströmers 1 schräg in Richtung der Breite des Gehäuses 2 lenken zu können, weist der Luftausströmer 1 Lamellen 11 auf, die um Schwenkachsen senkrecht zur Durchströmungsrichtung und senkrecht zur Breite des Gehäuses 2 schwenkbar sind. Die Lamellen 11 sind in jedem Luftkanal 6 gemeinsam parallel schwenkbar, die Lamellen 11 können in beiden Luftkanälen 6 gemeinsam oder getrennt schwenkbar sein. Durch Schwenken der Lamellen 11 lassen sich die Luftströme in den Luftkanälen 6 schräg in Richtung der Breite des Gehäuses 2 lenken, wodurch auch der gemeinsame Luftstrom aus der Luftaustrittsöffnung 3 des Luftausströmers 1, zu dem sich die Luftströme durch die beiden Luftkanäle 6 vereinigen, schräg in dieser Richtung gelenkt wird. Die Lamellen 11 bilden eine Luftleiteinrichtung 12, mit der der Luftstrom aus der Luftaustrittsöffnung 4 des Luftausströmers 1 schräg zur Seite, das heißt in Richtung der Breite des Gehäuses 2 gelenkt werden kann. Mit dem Luftmengenteiler 8 und den Lamellen 11 lässt sich der gemeinsame Luftstrom aus der Luftaustrittsöffnung 3 des Luftausströmers 1 in allen Richtungen, das heißt nach oben, unten, links und rechts, lenken.

In Figur 2 ist das Luftmengensteuerelement 7 der Luftmengensteuerung 8 als leistenförmige Luftleitklappe 13 ausgebildet, die wie der Profilkörper 9 in Figur 1 nahe dem der Lufteintrittsöffnung 3 des Luftausströmers 1 zugewandten Ende in einer Aussparung des Luftteilers 5 angeordnet ist. Die Luftleitklappe 13 in Figur 2 ist wie der Profilkörper 9 in Figur 1 um eine Schwenkachse 10 an einem der Luftaustrittsöffnung 4 zugewandten Ende der Luftleitklappe 13 schwenkbar, die in Richtung der Breite des Gehäuses 2 verläuft. Das Verhältnis der durch die beiden Luftkanäle 6 strömenden Luftmengen wird wie oben zu Figur 1 beschrieben gesteuert und lenkt den gemeinsamen Luftstrom aus der Luftaustrittsöffnung 4 des Luftausströmers 1 in die entsprechende Richtung.

Im Unterschied zu Figur 1 sind in den Luftkanälen 6 des Luftausströmers 1 aus Figur 2 keine Lamellen angeordnet, wobei solche Lamellen auch in Figur 2 möglich sind.

Im übrigen ist der Luftausströmer 1 aus Figur 2 gleich ausgebildet und funktioniert in gleicher Weise wie der Luftausströmer 1 aus Figur 1. Für übereinstimmende Bauteile werden in beiden Figuren gleiche Bezugszahlen verwendet. Zur Erläuterung der Figur 2 werden ergänzend die Erläuterungen der Figur 1 in Bezug genommen.

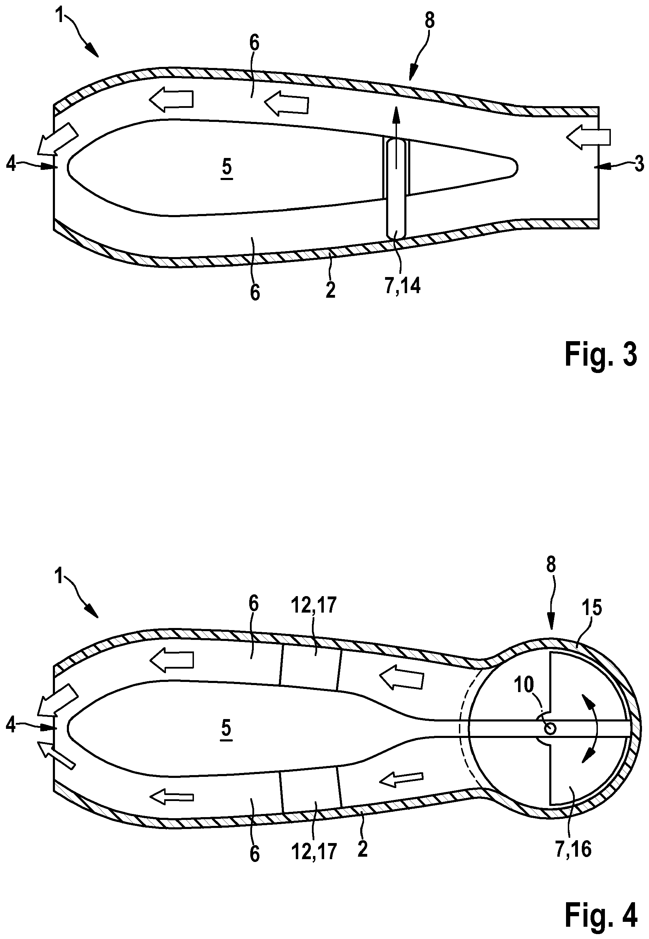

In Figur 3 weist die Luftmengensteuerung 8 einen Schieber 14 als Luftmengensteuerelement 7 auf. Der Schieber 14 ist leistenförmig und in einer Aussparung des Luftteilers 5 angeordnet und erstreckt sich über die gesamte Breite des Gehäuses 2. Er steht senkrecht zur Durchströmungsrichtung und ist senkrecht zur Durchströmungsrichtung verschiebbar im Luftteiler 5 geführt. In seinen Endstellungen versperrt der Schieber 14 jeweils einen der beiden Luftkanäle 6 und in Zwischenstellungen versperrt er beide Luftkanäle 6 teilweise, wobei eine Verschiebung des Schiebers 14 einen Luftdurchtritt und damit eine Luftmenge durch einen der beiden Luftkanäle 6 vergrößert und durch den anderen Luftkanal 6 zugleich verkleinert.

In Figur 3 sind keine Lamellen in den Luftkanälen 6 gezeichnet, es können allerdings Lamellen 11 wie in Figur 1 vorhanden sein. Im Übrigen ist der Luftteiler 1 aus Figur 3 gleich ausgebildet wie der Luftteiler 1 aus Figuren 1 und 2 und funktioniert in gleicher Weise. Übereinstimmende Bauteile sind in allen Figuren mit gleichen Bezugszahlen versehen und es werden ergänzend zur Erläuterung der Figur 3 die Erläuterungen der Figuren 1 und 2 in Bezug genommen.

In Figur 4 weist das Gehäuse 2 des Luftausströmers 1 zwei Zuluftkanäle 15 auf gegenüberliegenden Seiten auf, wobei in der Figur nur einer der beiden Zuluftkanäle 15 dargestellt ist, da der andere vor der Zeichenebene liegt. Jeder Zuluftkanal 15 geht jeweils in beide Luftkanäle 6 über, in die der Luftteiler 5 das Gehäuse 2 teilt. In den Zuluftkanälen 15 sind Drehschieber 16 als Luftmengensteuerelemente 7 angeordnet. Durch Schwenken der Drehschieber 16 lässt sich wie zu Figuren 1 bis 3 beschrieben ein Verhältnis von Luftmengen, die durch die beiden Luftkanäle 6 strömen, und damit eine Richtung eines Luftstroms aus der Luftaustrittsöffnung 4 steuern.

In den Luftkanälen 6 sind feststehende Lamellen 17 parallel nebeneinander angeordnet. Die Lamellen 17 sind schräg in Richtung einer Mitte des Gehäuses 2 gerichtet, das heißt die Lamellen 17 stehen in einer Hälfte des Gehäuses 2 schräg in einer Richtung und in einer anderen Hälfte des Gehäuses 2 schräg in einer entgegengesetzten Richtung. Indem die Luftmengen, die durch die Zuluftkanäle 15 von beiden Seiten in die Luftkanäle 6 strömen, mit den Drehschiebern 16 gesteuert werden, lässt sich der Luftstrom aus der Luftaustrittsöffnung 4 des Luftausströmers 1 schräg zur Seite lenken: Ist der Luftstrom in einer Hälfte des Gehäuses 2 größer, lenken die schräg zur Mitte stehenden Lamellen 17 den Luftstrom insgesamt in die entsprechende Richtung.

### Bezugszeichenliste

### Luftausströmer

- 1: Luftausströmer
- 2: Gehäuse
- 3: Lufteintrittsöffnung
- 4: Luftaustrittsöffnung
- 5: Luftteiler
- 6: Luftkanal
- 7: Luftmengensteuerelement
- 8: Luftmengensteuerung
- 9: Profilkörper
- 10: Schwenkachse
- 11: schwenkbare Lamelle
- 12: Luftleiteinrichtung
- 13: Luftleitklappe
- 14: Schieber
- 15: Zuluftkanal
- 16: Drehschieber
- 17: feststehende Lamelle

## Patentansprüche

1. Luftausströmer, mit einem Gehäuse (2), das eine Lufteintrittsöffnung (3), eine Luftaustrittsöffnung (3) und einen Luftteiler (5) aufweist, der das Gehäuse (2) in zwei Luftkanäle (6) teilt, die in Richtung der Luftaustrittsöffnung (4) schräg aufeinander zu verlaufen, **dadurch gekennzeichnet, dass** der Luftausströmer (1) in mindestens einem der beiden Luftkanäle (6) eine verstellbare Luftmengensteuerung (8) aufweist, mit der eine Luftmenge eines Luftstroms durch den Luftkanal (6) steuerbar ist.

2. Luftausströmer nach Anspruch 1, **dadurch gekennzeichnet, dass** der Luftausströmer (1) in beiden Luftkanälen (6) eine verstellbare Luftmengensteuerung (8) aufweist.

3. Luftausströmer nach Anspruch 1 oder 2, **dadurch gekennzeichnet, dass** die Luftmengensteuerung (8) ein durch den Luftteiler (5) in die Luftkanäle (6) bewegliches Luftmengensteuerelement (7) aufweist.

4. Luftausströmer nach einem der Ansprüche 1 bis 3, **dadurch gekennzeichnet, dass** der Luftausströmer (1) ein schwenkbares und/oder verschiebbares Luftmengensteuerelement (7) aufweist.

5. Luftausströmer nach Anspruch 4, **dadurch gekennzeichnet, dass** der Luftausströmer einen Drehschieber (16) als Luftmengensteuerelement (7) aufweist.

6. Luftausströmer nach einem der vorhergehenden Ansprüche, **dadurch gekennzeichnet, dass** der Luftausströmer (1) in mindestens einem der beiden Luftkanäle (6) eine verstellbare Luftleiteinrichtung (12) aufweist, mit der ein Luftstrom durch den Luftkanal (6) schräg zur Seite gelenkt werden kann.

7. Luftausströmer nach einem der vorhergehenden Ansprüche, **dadurch gekennzeichnet, dass** das Gehäuse (2) quer zu einer Strömungsrichtung flach und breit ist.
